(19) Europäisches Patentamt
European Patent Office
Office européen des brevets

(11) **EP 3 422 016 B1**

(12) **EUROPEAN PATENT SPECIFICATION**

(45) Date of publication and mention
of the grant of the patent:
**27.10.2021 Bulletin 2021/43**

(51) Int Cl.:
**G01N 35/00** *(2006.01)*        **G01N 35/04** *(2006.01)*
**G01N 35/02** *(2006.01)*

(21) Application number: **17755998.6**

(86) International application number:
**PCT/JP2017/000916**

(22) Date of filing: **13.01.2017**

(87) International publication number:
**WO 2017/145556 (31.08.2017 Gazette 2017/35)**

(54) **SPECIMEN-CONTAINER LOADING/STORING UNIT**

EINHEIT ZUM BESTÜCKEN/LAGERN VON PROBENBEHÄLTERN

UNITÉ DE CHARGEMENT/STOCKAGE DE CONTENANTS D'ÉCHANTILLON

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.02.2016 JP 2016035034**

(43) Date of publication of application:
**02.01.2019 Bulletin 2019/01**

(73) Proprietor: **Hitachi High-Tech Corporation
Minato-ku
Tokyo 105-6409 (JP)**

(72) Inventors:
• **TSUJIMURA Naoto
Tokyo 105-6409 (JP)**
• **ENDO Masashi
Tokyo 105-6409 (JP)**

(74) Representative: **Strehl Schübel-Hopf & Partner
Maximilianstrasse 54
80538 München (DE)**

(56) References cited:
EP-A1- 2 455 762        EP-A2- 1 902 294
WO-A1-01/31317          WO-A1-2011/148897
WO-A1-2014/042011       JP-A- 2006 030 035
JP-A- 2007 304 874      JP-A- 2012 021 911
JP-A- 2015 068 727      JP-A- 2015 068 727
US-A1- 2003 069 699     US-A1- 2004 206 419
US-A1- 2009 142 844     US-A1- 2014 240 096
US-A1- 2014 240 096

## Description

Technical Field

The present invention relates to a specimen inspection automation system including a specimen storing unit or a specimen loading unit capable of installing plural specimen trays on which a specimen container is installed.

Background Art

A specimen inspection automation system is constituted by a pre-processing part in which a specimen such as blood, urine, and the like is loaded into a specimen container, and processing such as centrifugal separation, specimen dispensing for subdivision, and the like before the specimen is measured by an automatic analyzer, and a post-processing part for performing closing, storage, and the like of the specimen after the specimen is measured by the automatic analyzer.

In a device disclosed in PTL 1 is provided with a specimen loading unit in which a specimen container is loaded, and a specimen storing unit in which the specimen is stored, and the specimen loading unit and the specimen storing unit use a specimen tray for installing the specimen container.

In the specimen loading unit, a specimen tray which is installed with the specimen container is installed, and the specimen container is pulled out of the specimen tray by using a robot arm, and the like, after which the pulled-out specimen container is automatically conveyed into a system. In the specimen storing unit, a specimen tray which is not installed with the specimen container is installed, and the specimen container is installed on the specimen tray by using the robot arm, and the like at the inside of the system. The specimen tray is provided with specific identification information, and an individual ID of the specimen tray, an ID of the installed specimen container, installation position information thereof, and the like are managed. Further, the specimen tray is prepared as a dedicated specimen tray corresponding to each system and is commonly used in loading and storing units.

US 2014/240096 A1 discloses a mount device for sample carriers including RFID tags on the sample carriers and a number RIFD antennas for establishing RFID communication between at least one pair of RFID tag and antenna. A sample sorting apparatus related to the present invention is disclosed in JP 2015 068727 A.

Citation List

Patent Literature

PTL 1: International Publication WO 2011/148897 (U.S. Patent Publication No. 2013/0061693)

Summary of Invention

Technical Problem

In PTL 1, the specimen tray that is usable in a specimen loading unit and a specimen storing unit is limited to a dedicated specimen tray prepared in advance. In the specimen storing unit, when the number of the specimens to be handled is different depending on intended use and operation, the specimen storing unit can be virtually divided on the same tray. However, since the specimen tray itself is not divided, convenience is not sufficient enough when the specimen container is carried to the next processing.

That is, in the related art, a type of a specimen tray installed in a specimen-container loading or storing unit is fixed to about one or two types in advance. Further, when the number of types of the specimen trays is modified, a modification of hardware is required, thereby having a difficulty in flexibly installing and using the specimen trays with a random combination. Accordingly, in consideration of handling quantities of the specimen containers which are different from each other depending on every request and every specimen type, an optimized specimen tray cannot be selected, resulting in a hindrance in an efficient operation of the specimen-container loading or storing unit.

An object of the present invention is to provide a specimen inspection automation system in which a plurality of types of specimen trays are freely combined with each other to be used.

Solution to Problem

In order to solve the above-mentioned problems, the present invention suggests the specimen-container loading or storing unit defined in Claim 1. Further advantageous features are set out in the dependent claims.

Advantageous Effects of Invention

According to the present invention, a plurality of types of specimen trays are freely combined with each other to be used.

Brief Description of Drawings

[Fig. 1] Fig. 1 is a diagram illustrating an overall configuration of a specimen inspection automation system.
[Fig. 2] Fig. 2 is a perspective view illustrating a configuration of a specimen storing unit.
[Fig. 3] Fig. 3 is a top view illustrating a configuration of the specimen storing unit.
[Fig. 4] Fig. 4 is a perspective view illustrating a configuration of various types of specimen trays.
[Fig. 5] Fig. 5 is a top view illustrating a configuration of various types of the specimen trays.
[Fig. 6] Fig. 6 is a top view illustrating a detailed configuration of the specimen tray.
[Fig. 7] Fig. 7 is a perspective view illustrating a specimen tray installation part.
[Fig. 8] Fig. 8 is a diagram in which the specimen tray is installed in the specimen storing unit.

Description of Embodiments

In the specification, "a specimen" represents a general term of an analysis object collected from a living body of a patient, and for example, blood or urine is the specimen. Further, the analysis object in which predetermined pre-processing is performed on the blood or the urine is also included as "the specimen".

Further, "an automatic analyzer" in the specification includes, for example, a biochemical automatic analyzer, an immunological automatic analyzer, a mass spectrometer for clinical examination, a blood coagulation analyzer for measuring coagulation time of blood, and the like. Additionally, the automatic analyzer may include a combined system in which the above-mentioned various analyzers are combined with each other, or an automatic analysis system to which the above-mentioned various analyzers are applied.

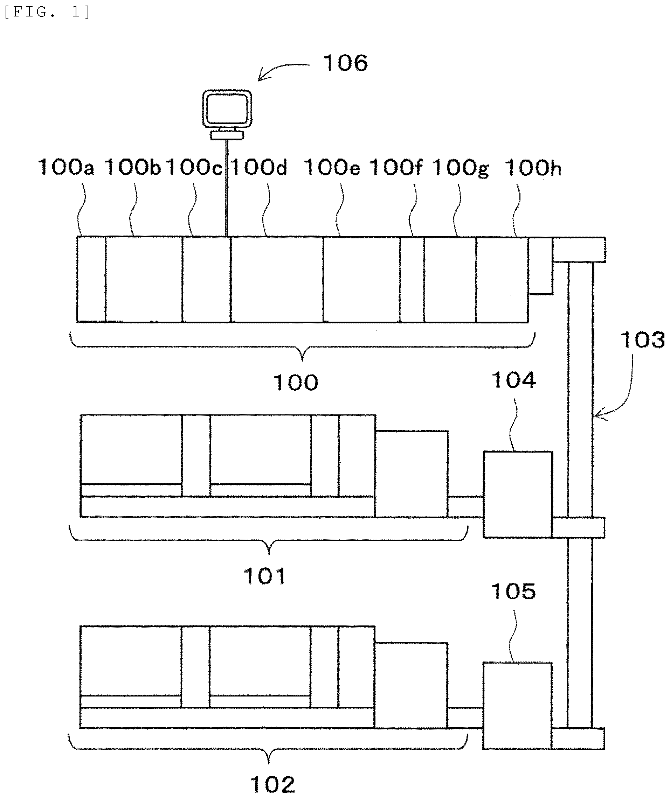

Fig. 1 is a diagram illustrating an overall configuration of a specimen inspection automation system. The specimen inspection automation system includes a pre-processing system 100, automatic analyzers 101 and 102, a conveyance line 103, specimen container transferring units 104 and 105, and a controller 106. The number of the automatic analyzers and the specimen container transferring units is not limited to two, but also can be formed by an arbitrary number.

In the specimen inspection automation system as illustrated in Fig. 1, the pre-processing system 100 and the automatic analyzers 101 and 102 are connected to each other by the conveyance line 103.

The pre-processing system 100 has a configuration in which plural units having various functions are connected to each other. Further, the pre-processing system 100 is a general term for a system in which various pre-processing is executed for a specimen loaded into the specimen inspection automation system, after which the loaded specimen is processed to be suitably analyzed by the automatic analyzer. The pre-processing system 100 is formed of a specimen loading unit 100d for loading a specimen container in which a specimen is stored; a centrifugal separation unit 100e for performing centrifugal separation processing on the specimen; an opening unit 100f for performing opening of a specimen container; an identification information attaching unit 100g for attaching pieces of identification information such as a bar code, and the like to a child-specimen container; a dispensing unit 100h for dispensing the specimen subdivided from the specimen container to the child-specimen container; a closing unit 100a for performing closing of the specimen container; a specimen storing unit 100b for storing the specimen container after processing is terminated; and a specimen holder storing unit 100c in which a specimen holder on which the specimen container is mounted is stored.

The automatic analyzer 101 is arranged in the conveyance line 103 through the specimen container transferring units 104 and 105. The automatic analyzers 101 and 102 perform analysis processing on a specimen of the specimen container on which the pre-processing is executed. The automatic analyzers 101 and 102 are connected to various analyzers used for a clinical use such as a biochemical analyzer, an immunological analyzer, a blood coagulation analyzer, and the like, depending on the uses.

The specimen container transferring units 104 and 105 are respectively provided between the conveyance line 103 and a plurality of the automatic analyzers 101 and 102. The specimen container transferring units 104 and 105 transfer the specimen container between a specimen container holder conveyed by the conveyance line 103 and a specimen container rack used for mounting and conveying the specimen container by using the respective automatic analyzers 101 and 102.

The conveyance line 103 conveys the specimen container holder on which a specimen container 207 is mounted between the pre-processing system 100 and the automatic analyzers 101 and 102.

The controller 106 controls overall operation of the specimen inspection automation system such as conveyance operation of the specimen existing in the specimen inspection automation system, operation of respective processing systems, and the like. Further, the controller 106 generally performs information management in the specimen inspection automation system. The controller 106 may be connected to a post-processing unit (not illustrated) not only capable of performing closing processing of the specimen container, the processing of which is completed in the automatic analyzer, but also capable of performing temporary storage, preservation, and the like for re-inspection.

The specimen container is loaded from the specimen loading unit 100d and is transferred into the system. After that, a bar code stuck to the specimen container is read, and the controller 106 is inquired about following processing with respect to the specimen stored in the specimen container based upon the read information. The following processing is performed based upon instruction from the controller 106.

The specimen storing unit 100b stores the specimen container processed in the system and is used for carrying the specimen container to the next processing depending on operation. Further, the specimen storing unit 100b is generally used for preservation, other automatic analyzers which are not connected to the specimen inspection automation system, outsourcing inspection, analysis by hand, and the like. Further, the specimen storing unit 100b may be used as a temporary storage place for the specimen container. When the automatic analyzers 101 and 102 connected to the system perform reexamination, the stored specimen container may be transferred to the system again according to the instruction of the controller 106 and may be transferred to the automatic analyzer 101 or 102 via the dispensing unit as necessary.

A holder conveyance line for conveying a specimen container holder, in which the specimen container is installed in one unit, is provided in the above-mentioned units of the pre-processing system 100, and in the conveyance line 103 and the specimen container transferring units 104 and 105, such that the specimen container is conveyed into the system.

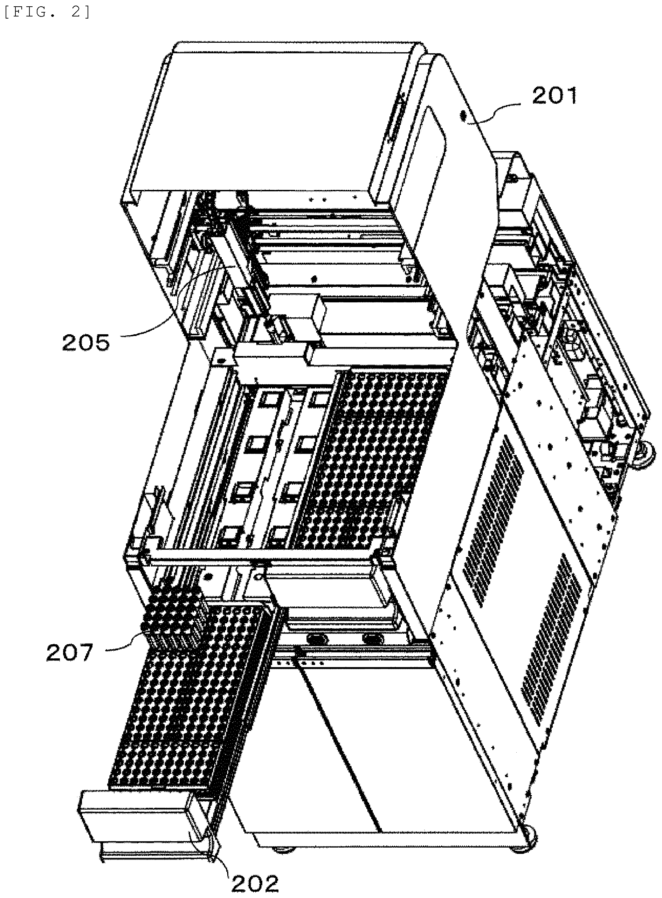

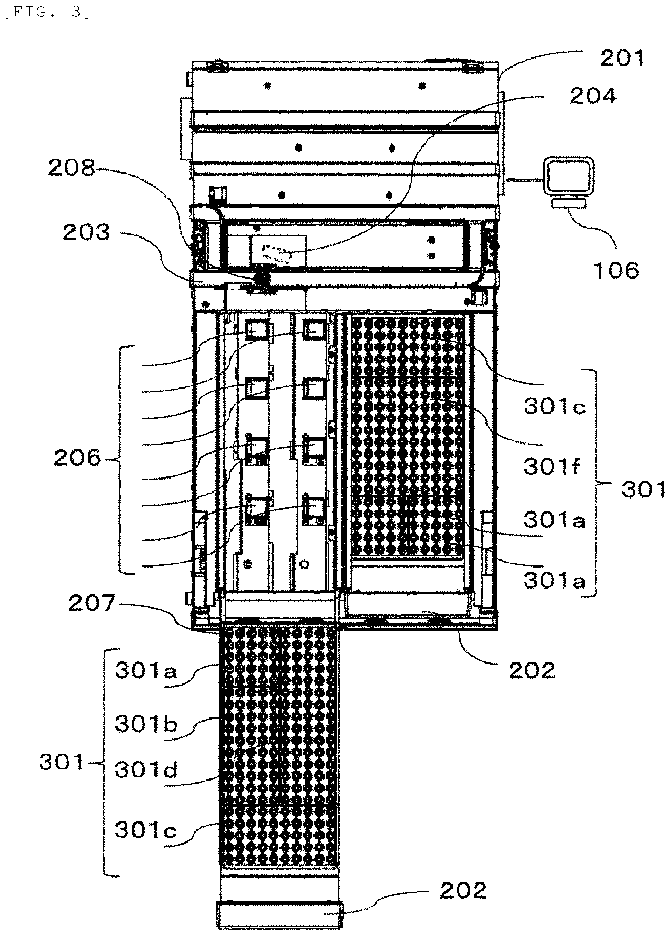

The specimen storing unit according to the exemplary embodiment will now be described with reference to Figs. 2 and 3. Fig. 2 illustrates a perspective view of the specimen storing unit, and Fig. 3 illustrates a top view of the specimen loading unit of Fig. 2.

Further, since configurations of the specimen storing unit and the specimen loading unit are often similar to each other, the specimen storing unit will be described as an example of the embodiments. Meanwhile, the specimen loading unit can be also formed based upon the same configuration.

A specimen storing unit 201 includes a specimen tray installation part 202 for installing a specimen tray 301 on which a plurality of specimen containers 207 can be installed, an identification information reader part 206 for reading identification information of the specimen tray 301, a specimen-conveying conveyor 203 for conveying the specimen container in the specimen inspection automation system, a bar-code reader 204 for reading the identification information stuck to the specimen container 207, and a specimen container transferring mechanism 205 for transferring the specimen container 207 between the specimen-conveying conveyor 203 and the specimen tray 301.

The specimen tray installation part 202 is a drawer type, thereby considering usability when the specimen tray is installed. In the exemplary embodiment, the specimen tray installation part 202 illustrates two examples. However, the specimen tray installation part 202 is not limited thereto and can be formed by an arbitrary number. Further, the specimen tray installation part 202 is not required to be the drawer type. As described later, a plurality of the specimen trays can be installed in the specimen tray installation part 202. Additionally, the plurality of specimen trays may have a different size.

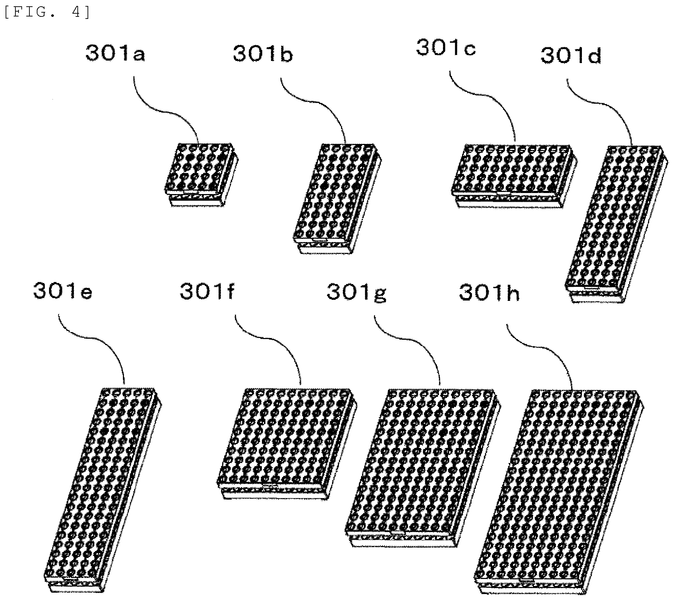

As illustrated in Fig. 4, a plurality of types of sizes are prepared for the specimen tray 303. That is, a specimen tray having a different number of the specimen container installation parts for holding the specimen container or having a different arrangement thereof is used as the specimen tray installed in the specimen tray installation part 202. Hereinafter, the storage number of the tray in a lateral direction of the minimum storage number (minimum size) is referred to as m, and the storage number of the tray in a vertical direction thereof is referred to as n (m and n are respectively positive integer values). In the exemplary embodiment, a specimen tray 301a for holding 25 specimen containers that is capable of storing 25 specimen containers formed as m=5 and n=5 is provided as a minimum unit. Other trays are formed as K×m rows and L×n columns (K and L are respectively positive integer values) . For example, a specimen tray 301b for holding 50 specimen containers is formed as K=2 and L=1; a specimen tray 301c for holding 50 specimen containers is formed as K=1 and L=2; a specimen tray 301d for holding 75 specimen containers is formed as K=3 and L=1; a specimen tray 301e for holding 100 specimen containers is formed as K=4 and L=1; a specimen tray 301f for holding 100 specimen containers is formed as K=2 and L=2; a specimen tray 301g for holding 150 specimen containers is formed as K=3 and L=2; and a specimen tray 301h for holding 200 specimen containers is formed as K=4 and L=2. Further, in the exemplary embodiment, the specimen trays are illustrated as 8 types from 301a to 201h as one example. However, if the number of rows and columns is an integer multiple of m and n, it is possible not only to increase the installation number of the specimen containers, but also to freely divide the type of the specimen trays.

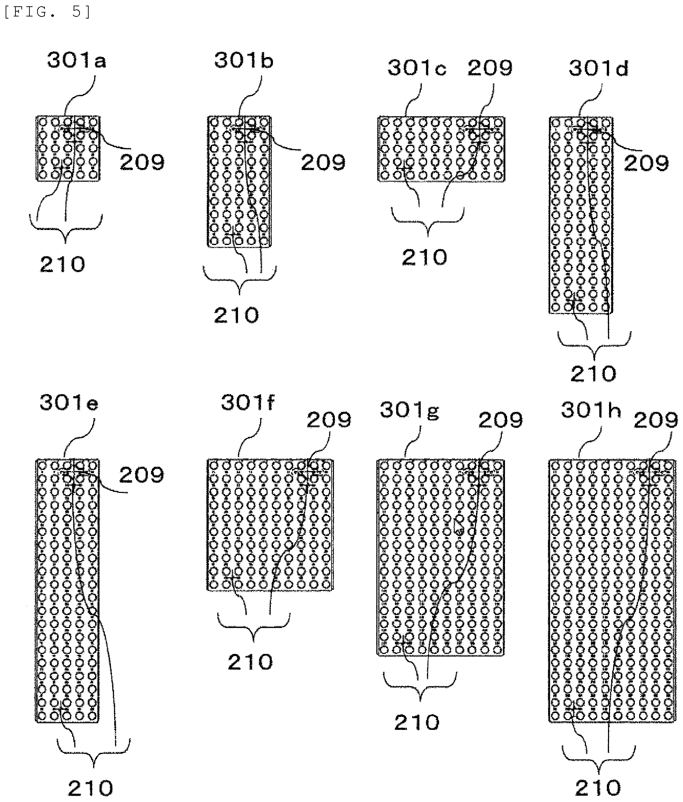

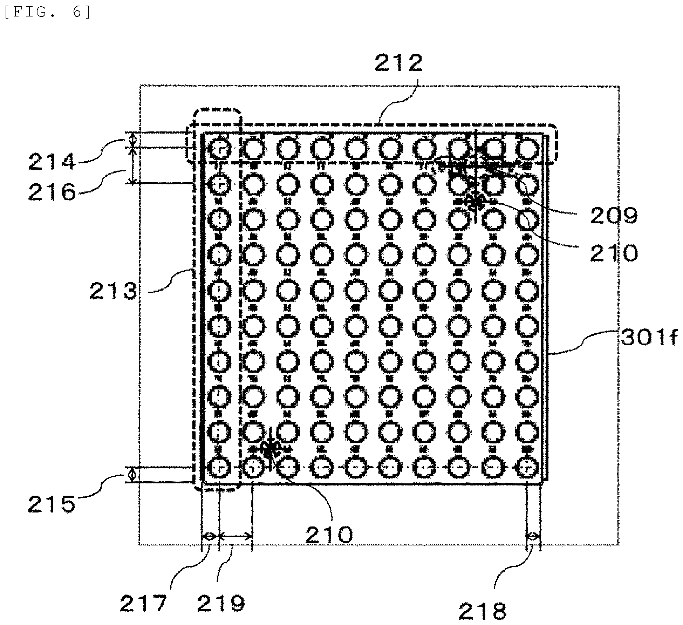

An identification information tag 209 is attached to each specimen tray at a predetermined position. In the identification information tag 209, a size of the own specimen tray and a specific identification number of each specimen tray are registered in advance. The specific identification number of the specimen tray 301 may be further clearly described in a body of the specimen tray 301. The identification information tag 209 will be described later with reference to Figs. 5 and 6.

An operator handling the system registers use of the specimen tray 301 expected to be used in the specimen storing unit 201 and a specimen tray to be used for the above-mentioned use in the controller 106 in advance. The operator can select and register the specimen tray having a desirable size depending on the use of the specimen tray 301. For example, a specimen tray to be used for preservation is registered as the specimen tray 301h for holding 200 specimen containers that is capable of installing 200 specimen containers. In the same manner, a tray for outsourcing inspection is registered as the specimen tray 301a for holding 25 specimen containers, and the like.

After registration thereof, the operator arranges the specimen tray 301 registered in the specimen tray installation part 202, which is drawn out, at a desired position. After arranging the specimen tray 301, when a drawer of the specimen tray installation part 202 is returned, the identification information tag 209 of the specimen tray 301 is overlapped with the identification information reader part 206, such that the identification information tag 209 thereof can be read. A plurality of the identification information reader parts 206 are provided directly under the specimen tray installation part 202 (a position directly under the specimen tray installation part 202 when the drawer is closed). The identification information reader part 206 reads information for identifying a type of the specimen tray 301 from the identification information tag of the specimen tray 301 installed in the specimen tray installation part 202. The controller 106 recognizes an arrangement position of the specimen tray 301 and a size thereof based upon the information read by the identification information reader part 206, after which an arrangement state of the specimen tray arranged in the specimen storing unit 201 is stored in a storage part (not illustrated) connected to the controller 106. For example, the storage part is a memory of a computer or a hard disk thereof. The information on the arrangement state of the specimen tray 301 is updated by opening and closing the drawer of the specimen tray installation part 202 and by exchanging the specimen tray 301. An update timing can be set by the controller 106.

Normally, the specimen container loaded from the specimen loading unit is performed with various kinds of processing in the specimen inspection automation system and then arrives at a specimen transferring position 208 via the specimen-conveying conveyor 203 in the system. At the specimen transferring position, the identification information stuck to the specimen container is read by the bar-code reader 204. After reading the information of the specimen stored in the specimen container by the bar-code reader 204, the controller 106 is inquired about the aforementioned information. The controller 106 discriminates the specimen tray corresponding to the processing corresponding to the specimen and instructs the specimen tray of a storage destination. The specimen container is transferred to the specimen tray instructed from the controller 106 by the specimen container transferring mechanism 205. For example, when there is an instruction for preservation, the tray is transferred to a position where the tray 301h for holding 200 specimen containers registered in advance is arranged.

The controller 106 stores the specific number of the specimen tray by which the specimen container 207 is transferred and the position thereof, so that the specific number and the position can be searched by the controller 106. Therefore, when re-inspection is required to be performed in the automatic analyzer 101 or 102, the corresponding specimen container 207 can be fetched again in the specimen inspection automation system according to the instruction from the controller 106. In this case, first, the position of the specimen tray 301 in which the specimen container required to be re-inspected is installed is specified by the controller 106. The controller 106 instructs the specimen container transferring mechanism 205 to collect the specimen container from the corresponding position. The specimen container transferring mechanism 205 collects the specimen container according to the instruction and transfers the specimen container to the specimen transferring position 208 on the specimen-conveying conveyor 203. Next, the bar-code reader 204 reads the identification information of the transferred specimen container. After reading the bar code, the controller 106 is inquired about the following processing with respect to the corresponding specimen based upon the information read by the bar-code reader 204, and the corresponding specimen is conveyed again into the system according to the instruction of the controller 106.

Fig. 5 illustrates a top view of the specimen tray of Fig. 4. The identification information tag 209 and a positioning part (recessed part) 210 are provided on bottom parts of the respective specimen trays. The identification information tag 209 and the positioning part (recessed part) 210 are provided at predetermined positions in the respective specimen trays. More specifically, for example, each specimen tray is provided at a position becoming a predetermined distance from an end surface of each specimen tray (for example, an upper surface and a right-side surface).

It is desirable that the identification information tag 209 can read information in an RFID tag when entering in a predetermined distance range from the identification information reader part 206. For example, the identification information tag 209 is the RFID tag, and the identification information reader part 206 is an RFID reader. In the case of the RFID tag, as illustrated in Fig. 3, a plurality of the identification information reader parts 206 for reading the identification information are regularly arranged at positions where the identification information tags 209 of the specimen trays 301a to 301h can be read in the specimen storing unit. More specifically, when the specimen tray installation part is the drawer type, the identification information reader is arranged in such a manner that the identification information tag of the specimen tray that is normally arranged is positioned within a predetermined distance range when the drawer is closed. In the exemplary embodiment, sixteen identification information reader parts 206 are arranged and can be increased or decreased depending on a type of the usable specimen tray. A position where the specimen tray is arranged can be determined based upon a combination of successful or unsuccessful reading of the identification information in the respective plurality of identification information readers. The specimen trays can be arranged in a free combination even though the types of the specimen trays are increased by including a mechanical interface according to the combination of the RFID tag and the RFID reader.

Further, numbers are determined from No. 1 to identify the respective specimen container installation parts in the specimen container installation parts of the respective specimen trays, and numbers corresponding to the maximum installation number of the specimen containers are allocated thereto. When the specimen container 207 processed in the system is conveyed to the specimen storing unit 201, the specific number of the specimen tray 301 and information on a position where the specimen container is installed in the specimen tray (number corresponding to the specimen container installation part) are managed by the controller 106. The above-mentioned pieces of information are used when searching for the required specimen container 207, and the like in the future.

An arrangement of the specimen container installation part of the specimen tray 301 will now be described with reference to Fig. 6. The specimen tray 301f is used as an example.

As described above, when the specimen container installation part of the specimen tray is an integer multiple in vertical and horizontal directions of the trays having the minimum storage number, the specimen container installation part can be freely formed as n rows × m columns. However, a distance (pitch) between the specimen container installation parts and a distance from an end surface of the specimen container are defined. For example, the specimen container installation part is arranged to accomplish a relationship as described below.

$$p1>d1+d2 \quad and \quad p2>d3+d4$$

here,

d1: a distance 214 from a first side surface of the specimen tray (an upper surface in Fig. 6) to a specimen container installation part which is most closely adjacent to the first side surface;

d2: a distance 215 from a second side surface of the specimen tray (a side surface opposite to the first side surface, a lower surface in Fig. 6) to a specimen container installation part which is most closely adjacent to the second side surface; p1: a distance (a pitch) 216 in a direction between the specimen container installation parts (a direction perpendicular to the first side surface and the second side surface, and an up-and-down direction in Fig. 6);

d3: a distance 217 from a third side surface of the specimen tray (a left surface in Fig. 6) to a specimen container installation part which is most closely adjacent to the third side surface;

d4: a distance 218 from a fourth side surface of the specimen tray (a side surface opposite to the third side surface, a right side surface in Fig. 6) to a specimen container installation part which is most closely adjacent to the fourth side surface; and

p2: a distance (pitch) 219 in a direction perpendicular to the p1 direction between the specimen container installation parts (a direction perpendicular to the third side surface and the fourth side surface, and left and right directions in Fig. 6) .

In a case where the above-mentioned relationship is collapsed, when a plurality of the trays having different sizes are arranged in combination, an end part of the tray interferes with other trays, such that the distance (p1) between the specimen container installation parts belonging to the trays having different sizes cannot be uniformly arranged. It is required to uniformly arrange the distance (p1) between the specimen container installation parts regardless of how the tray arrangement is combined to effectively use a space in the specimen storing unit. Even when the specimen tray is arranged in a free combination, a positional relationship of installing the specimen container does not change by satisfying the above-mentioned relationship. Accordingly, it is advantageously possible to effectively use the specimen container without reducing the installable number of the specimen containers in the specimen storing unit.

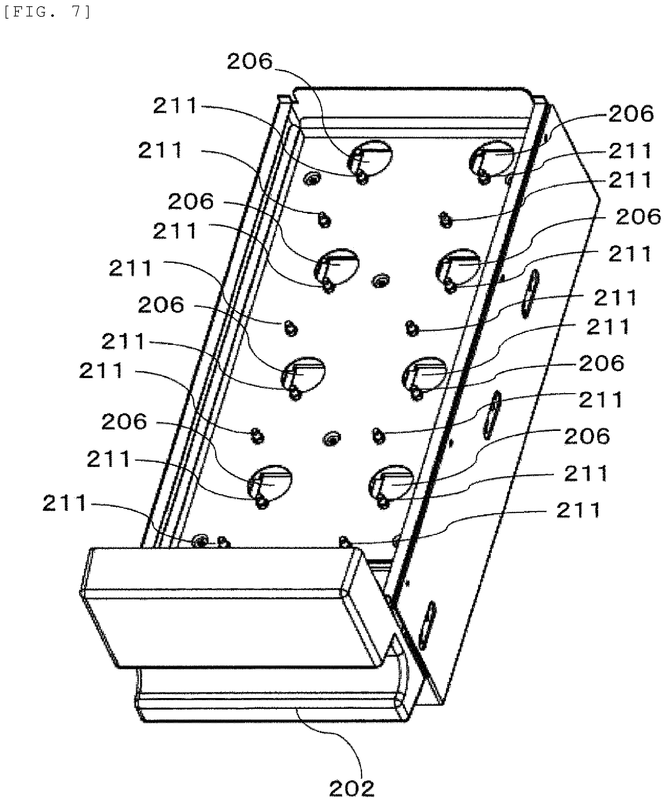

Next, a structure of the specimen tray installation part 202 of the specimen storing unit 201 will now be described with reference to Fig. 7. As described in Fig. 5, the positioning part (the recessed part) 210 at a time of the installation is provided on a bottom surface of the specimen tray 301 and provided at a position which becomes a reference of the specimen tray 301. Meanwhile, as illustrated in Fig. 7, a positioning part (a projected part) 211 which is engaged with the positioning part (the recessed part) 210 is regularly arranged in the specimen tray installation part 202 of the specimen storing unit 201. Positioning with respect to a regular position can be performed in the fitting of the recessed part and the projected part. That is, a position where the specimen tray 301 is installed can be limited to a position where the positioning part (the recessed part) 210 and the positioning part (the projected part) 211 are engaged with each other. Then, when the positioning part (the recessed part) 210 and the positioning part (the projected part) 211 are installed at a fitting position, the identification information reader part 206 is arranged in such a manner that the identification information tag 209 is arranged in a range where the identification information tag 209 is readable by the identification information reader part 206. When the specimen tray 301 is installed at a wrong position, the above-mentioned two positioning parts cannot be fitted to each other, such that the specimen tray 301 floats up, and thus the drawer of the specimen tray installation part 202 becomes a structure in which the drawer thereof cannot be returned. Further, contrary to the exemplary embodiment, the specimen tray may be provided with the projected part, and the specimen storing unit may be provided with the recessed part.

In the specimen storing unit 201, when installation failure of the specimen tray 301 or incorrect installation thereof (installation direction error) occurs, there exist a risk of specimen loss caused by installation failure of the specimen container 207 and a risk of mismatching of installation position information. Therefore, it is required to clearly install the specimen tray. According to the exemplary embodiment, since the specimen storing unit 201 cannot recognize the incorrectly installed specimen tray 301, the risk of the specimen loss caused by the installation failure of the specimen container 207, the risk of the mismatching of the installation position information, and the like can be prevented in advance.

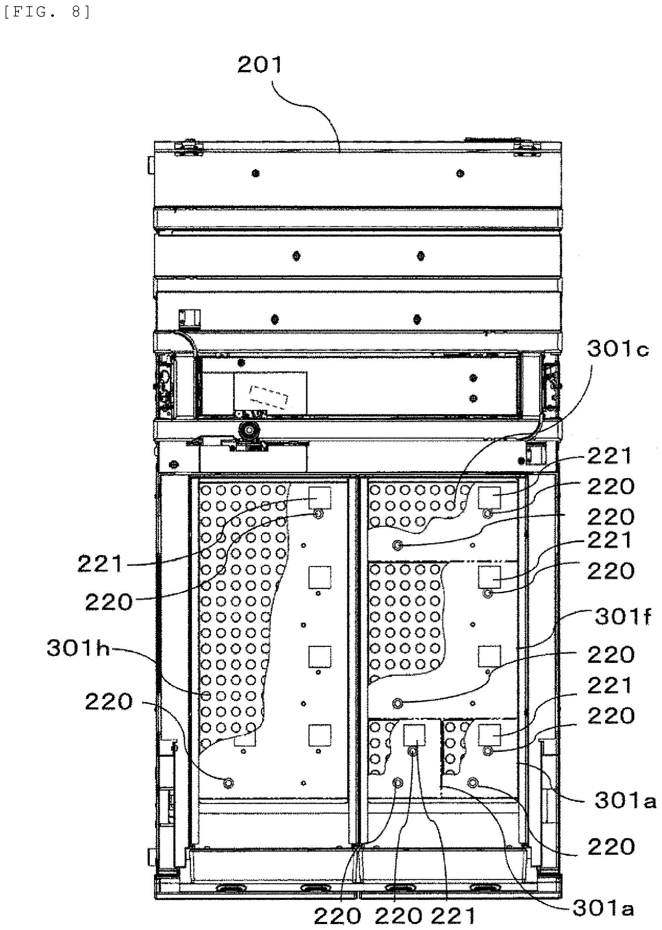

Fig. 8 illustrates an example of an actual arrangement of the specimen trays 301a to 301h combined with the specimen storing unit 201. Fig. 8 is a diagram illustrating a top surface of the specimen storing unit 201. Here, a part of the specimen tray is omitted in the diagram of the specimen container, and a state of a bottom surface of the specimen tray is illustrated.

In each case, positioning of the positioning part (the recessed part) and the positioning part (the projected part) is clearly performed at a fitting position 220. Further, the identification information reader part and the identification information tag are overlapped with each other at a specified position 221, such that the identification information can be read.

A specimen tray of the related art has adopted a specimen tray which is suitable for each specimen inspection automation system in consideration of a size of the specimen storing unit or a size of the specimen loading unit, a maximum installable number of the specimen containers as a unit, and the like. In the related art, a type of the specimen tray which is usable in the specimen tray installation part is fixed. However, according to the present invention, a plurality of types of the specimen trays can be flexibly used without remodeling hardware, thereby having an effect of selecting a tray in consideration of the use of a user.

When using the specimen tray of the exemplary embodiment in the specimen loading unit, the specimen containers sorted according to a scale of a facility, specialty, a specimen type, and the like vary depending on operation. At this time, a choice option of the specimen tray is expanded depending on the operation, thereby improving convenience.

When the specimen tray of the exemplary embodiment is used in the specimen storing unit, a specimen tray which can install a large quantity is desirably required for preservation, whereas a specimen tray having a small installable number is sufficient for analysis by hand in which the number of processes is small. Accordingly, since the specimen trays set in a plurality of storage destinations (sorting destinations) can be efficiently installed, the choice option of the specimen tray corresponding to the operation of the user is expanded, thereby improving the convenience.

Reference Signs List

100: pre-processing system
100a: closing unit
100b: specimen storing unit
100c: specimen holder storing unit
100d: specimen loading unit
100e: centrifugal separation unit

100f: opening unit
100g: identification information attaching unit
100h: dispensing unit
101, 102: automatic analyzer
103: conveyance line
104, 105: specimen container transferring unit
106: controller
201: specimen storing unit
202: specimen tray installation part
203: specimen-conveying conveyor
204: bar-code reader
205: specimen container transferring mechanism
206: identification information reader part
207: specimen container
208: specimen transferring position
209: identification information tag
210: positioning part (recessed part)
211: positioning part (projected part)
212: specimen container installation part on specimen tray (m row)
213: specimen container installation part on specimen tray (n column)
214: distance from one side surface of specimen tray to center of specimen container installation part (d1)
215: distance from one side surface of specimen tray to center of specimen container installation part (d2)
216: distance between centers of specimen container installation parts (p1)
217: distance from one side surface of specimen tray to center of specimen container installation part (d3)
218: distance from one side surface of specimen tray to center of specimen container installation part (d4)
219: distance between centers of specimen container installation parts (p2)
220: fitting position of positioning part (recessed Part) and positioning part (projected part)
221: combination position of identification information reader part and identification information tag
301: specimen tray
301a: specimen tray for holding 25 specimen containers
301b, 301c: specimen trays for holding 50 specimen containers
301d: specimen tray for holding 75 specimen containers
301e, 301f: specimen trays for holding 100 specimen containers
301g: specimen tray for holding 150 specimen containers
301h: specimen tray for holding 200 specimen containers

**Claims**

1. A specimen loading or storing unit, comprising:

a plurality of types of specimen trays (301), each configured to have a different size and provided with a plurality of specimen container installation parts (213) for holding a specimen container (207);

a specimen container transferring mechanism (205) configured to transfer the specimen container between a conveyance line (203) and the specimen tray;

a specimen tray installation part (202) configured to install the plurality of types of specimen trays; and

a plurality of identification information readers (206) arranged directly under the specimen tray installation part and configured to read information for identifying a type of specimen tray from a single identification information tag (209) attached to each specimen tray;

wherein each identification information tag is readable, when the identification information tag is positioned within a predetermined distance range from any one of the identification information readers;

wherein the specimen loading or storing unit is adapted to determine a position where any one of the specimen trays is arranged based upon a combination of successful or unsuccessful reading attempts of the plurality of identification information readers, and

**characterized in that**:

the plurality of the specimen container installation parts are arranged to achieve a relationship which is p1>d1+d2 and p2>d3+d4,

when d1 is set as a distance (214) from a first side surface of the specimen tray to the center of a specimen container installation part which is most closely adjacent to the first side surface, d2 is set as a distance (215) from a second side surface of the specimen tray opposite to the first side surface of the specimen tray to the center of a specimen container installation part which is most closely adjacent to the second side surface,

p1 is set as a distance (216) in a direction perpendicular to the first side surface and the second side surface between the center of two adjacent specimen container installation parts,

d3 is set as a distance (217) from a third side surface of the specimen tray to the center of a specimen container installation part which is most closely adjacent to the third side surface,

d4 is set as a distance (218) from a fourth side surface opposite to the third side surface of the specimen tray to the center of a specimen container installation part which is most closely adjacent to the fourth side surface, and

p2 is set as a distance (219) in a direction perpendicular to the third side surface and the fourth side surface between the center of two adjacent specimen container installation parts.

2. The specimen loading or storing unit according to claim 1, wherein

the specimen tray installation part (202) is a drawer type, and

the identification information reader (206) is arranged in such a manner that the identification information tag (209) of the specimen tray (301) normally arranged is positioned within the predetermined distance range from the identification information reader when the specimen tray installation part is closed.

3. The specimen loading or storing unit according to claim 1, wherein

the number of specimens stored vertically and horizontally in the plurality of types of specimen trays (301) is an integer multiple of the number of the specimens stored vertically and horizontally in a specimen tray having a predetermined minimum size.

4. The specimen loading or storing unit according to claim 1, wherein

the specimen tray installation part (202) includes a projected part (211) or a recessed part configured to be engaged with a respective recessed part (210) or a respective projected part provided in a bottom surface of the specimen tray (209).

**Patentansprüche**

1. Einheit zum Laden oder Speichern von Proben, umfassend:

mehrere Arten von Probentabletts (301), wobei jedes mit einer unterschiedlichen Größe eingerichtet ist und mit mehreren Probenbehälter-Installationsteilen (213) zum Halten eines Probenbehälters (207) versehen ist;

einen Probenbehälter-Transportmechanismus (205), der zum Transportieren des Probenbehälters zwischen einer Förderlinie (203) und dem Probentablett eingerichtet ist;

ein Probentablett-Installationsteil (202), das dazu eingerichtet ist, die mehreren Arten von Probentabletts zu installieren; und

mehrere Identifikationsinformations-Leseeinrichtungen (206), die unmittelbar unter dem Probentablett-Installationsteil angeordnet sind und dazu eingerichtet sind, Informationen zum Identifizieren einer Art des Probentabletts von einem an jedem Probentablett angebrachten einzelnen Identifikationsinformations-Tag (209) abzulesen;

wobei jeder Identifikationsinformations-Tag lesbar ist, wenn der Identifikationsinformations-Tag innerhalb eines vorgegebenen Abstandsbereichs von irgendeiner der Identifikationsinformations-Leseeinrichtungen positioniert ist;

wobei die Einheit zum Laden oder Speichern von Proben dazu ausgelegt ist, eine Position, an der irgendeines der Probentabletts angeordnet ist, auf der Grundlage einer Kombination von erfolgreichen oder erfolglosen Leseversuchen der mehreren Identifikationsinformations-Leseeinrichtungen zu bestimmen, und **gekennzeichnet dadurch, dass**:

die mehreren Probenbehälter-Installationsteile so angeordnet sind, dass eine Beziehung erfüllt wird, die p1>d1+d2 und p2>d3+d4 ist,

wobei d1 als ein Abstand (214) von einer ersten Seitenfläche des Probentabletts zum Mittelpunkt eines Probenbehälter-Installationsteils, das der ersten Seitenfläche am nächsten angrenzend ist, eingestellt ist, d2 als ein Abstand (215) von einer zweiten Seitenfläche des Probentabletts, die der ersten Seitenfläche des Probentabletts gegenüber liegt, zum Mittelpunkt eines Probenbehälter-Installationsteils, das der zweiten Seitenfläche am nächsten angrenzend ist, eingestellt ist, p1 als ein Abstand (216) in einer zu ersten Seitenfläche und zur zweiten Seitenfläche senkrechten Richtung zwischen den Mittelpunkten zweier benachbarter Probenbehälter-Installationsteile eingestellt ist, d3 als ein Abstand (217) von einer dritten Seitenfläche des Probentabletts zum Mittelpunkt eines Probenbehälter-Installationsteils, das der dritten Seitenfläche am nächsten angrenzend ist, eingestellt ist, d4 als ein Abstand (218) von einer der dritten Seitenfläche gegenüberliegenden vierten Seitenfläche des Probentabletts zum Mittelpunkt eines Probenbehälter-Installationsteils, dass der vierten Seitenfläche am nächsten angrenzend ist, eingestellt ist und p2 als ein Abstand (219) in einer zur dritten Seitenfläche und zur vierten Seitenfläche senkrechten Richtung zwischen den Mittelpunkten zweier benachbarter Probenbehälter-Installationsteile eingestellt ist.

2. Einheit zum Laden oder Speichern von Proben nach Anspruch 1, wobei

das Probentablett-Installationsteil (202) schubladenartig ist und die Identifikationsinformations-Leseeinrichtung (206) so angeordnet ist, dass der Identifikationsinformations-Tag (209) des normal angeordneten Probentabletts (301) innerhalb des vorgegebenen Abstandsbereichs von der Identifikationsinformations-Leseeinrichtung positioniert ist, wenn das Probentablett-Installationsteil geschlossen ist.

3. Einheit zum Laden oder Speichern von Proben nach Anspruch 1, wobei

die Anzahl von vertikal und horizontal in den mehreren Arten von Probentabletts (301) gespeicherten Proben ein ganzzahliges Vielfaches der Anzahl der vertikal und horizontal in einem Probentablett mit einer vorgegebenen Minimalgröße gespeicherten Proben ist.

4. Einheit zum Laden oder Speichern von Proben nach Anspruch 1, wobei

das Probentablett-Installationsteil (202) ein vorspringendes Teil (211) oder ein zurückgesetztes Teil enthält, das dazu eingerichtet ist, mit einem entsprechenden zurückgesetzten Teil (210) bzw. einem entsprechenden vorspringenden Teil, das in einer Bodenfläche des Probentabletts (209) vorgesehen ist, in Eingriff zu kommen.

**Revendications**

1. Unité de chargement ou de stockage d'éprouvettes, comprenant :

une pluralité de types de plateaux (301) pour éprouvettes, chacun configuré pour avoir une taille différente et prévu avec une pluralité de parties (213) d'installation de récipients pour éprouvettes pour contenir un récipient (207) pour éprouvette ;

un mécanisme (205) de transfert de récipients pour éprouvettes configuré pour transférer le récipient pour éprouvette entre une ligne (203) de transport et le plateau pour éprouvettes ;

une partie (202) d'installation de plateaux pour éprouvettes configurée pour installer la pluralité de types de plateaux pour éprouvettes ; et

une pluralité de lecteurs (206) d'informations d'identification agencés directement sous la partie d'installation de plateau pour éprouvettes et configurés pour lire des informations pour identifier un type de plateau pour éprouvettes à partir d'une étiquette (209) d'informations d'identification unique fixée à chaque plateau pour éprouvettes ;

dans laquelle chaque étiquette d'informations d'identification est lisible, lorsque l'étiquette d'informations d'identification est positionnée à l'intérieur d'une plage de distance prédéterminée par rapport à l'un quelconque des lecteurs d'informations d'identification ;

dans laquelle l'unité de chargement ou de stockage d'éprouvettes est adaptée à déterminer une position où l'un quelconque des plateaux pour éprouvettes est agencé sur la base d'une combinaison de tentatives réussies ou ratées de lecture de la pluralité de lecteurs d'informations d'identification, et

**caractérisée en ce que** :

la pluralité de parties d'installation de récipients pour éprouvettes sont agencées pour réaliser une relation qui est p1>d1+d2 et p2>d3+d4,

lorsque d1 est définie comme une distance (214) d'une première surface latérale du plateau pour éprouvettes au centre d'une partie d'installation de récipients pour éprouvettes qui est la plus étroitement adjacente à la première surface latérale,

d2 est définie comme une distance (215) d'une deuxième surface latérale du plateau pour éprouvettes opposée à la première surface latérale au centre d'une partie d'installation de récipients pour éprouvettes qui est la plus étroitement adjacente à la deuxième surface latérale,

p1 est définie comme une distance (216) dans une direction perpendiculaire à la première surface latérale et à la deuxième surface latérale entre le centre de deux parties adjacentes d'installation de récipients pour éprouvettes,

d3 est définie comme une distance (217) d'une troisième surface latérale du plateau pour éprouvettes au centre d'une partie d'installation de récipients pour éprouvettes qui est la plus étroitement adjacente à la troisième surface latérale,

d4 est définie comme une distance (218) d'une quatrième surface latérale opposée à la troisième surface latérale du plateau pour éprouvettes au centre d'une partie d'installation de récipients pour éprouvettes qui est la plus étroitement adjacente à la quatrième surface latérale, et

p2 est définie comme une distance (219) dans une direction perpendiculaire à la troisième surface latérale et à la quatrième surface latérale entre le centre de deux parties adjacentes d'installation de récipients pour éprouvettes.

2. Unité de chargement ou de stockage d'éprouvettes selon la revendication 1, dans laquelle

la partie (202) d'installation de plateaux pour éprouvettes est un type tiroir, et

le lecteur (206) d'informations d'identification est agencé de telle manière que l'étiquette (209) d'informations d'identification du plateau (301) pour éprouvettes normalement agencée est positionnée à l'intérieur de la plage de distance prédéterminée par rapport au lecteur d'informations d'identification lorsque la partie d'installation de plateaux pour éprouvettes est fermée.

3. Unité de chargement ou de stockage d'éprouvettes selon la revendication 1, dans laquelle
le nombre d'éprouvettes stockées verticalement et horizontalement dans la pluralité de types de plateaux (301) pour éprouvettes est un multiple entier du nombre des éprouvettes stockées verticalement et horizontalement dans un plateau pour éprouvettes ayant une taille minimum prédéterminée.

4. Unité de chargement ou de stockage d'éprouvettes selon la revendication 1, dans laquelle
la partie (202) d'installation de plateaux pour éprouvettes inclut une partie en projection (211) ou une partie en renfoncement configurée pour être engagée avec une partie en renfoncement (210) respective ou une partie en projection respective prévue dans une surface de fond du plateau (209) pour éprouvettes.

[FIG. 1]

[FIG. 2]

[FIG. 3]

EP 3 422 016 B1

[FIG. 4]

301a    301b    301c    301d

301e    301f    301g    301h

14

[FIG. 5]

[FIG. 6]

[FIG. 7]

[FIG. 8]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014240096 A1
- JP 2015068727 A
- WO 2011148897 A
- US 20130061693 A